# NEUE EUROPÄISCHE PATENTSCHRIFT

(11) **EP 0 617 861 B2**
(45) Veröffentlichungstag und Bekanntmachung des Hinweises auf die Entscheidung über den Einspruch: **14.11.2001**
(45) Hinweis auf die Patenterteilung: 12.07.1995
(21) Anmeldenummer: 92923686.7
(22) Anmeldetag: 28.11.1992
(51) Int. Cl.: H04B 7/26, H04Q 7/20

(54) **VERFAHREN ZUR VERBESSERUNG DER FUNKZELLENAUSLEUCHTUNG BEI EINEM ZELLULAREN MOBILFUNKSYSTEM UND VORRICHTUNG ZUR AUSÜBUNG DES VERFAHRENS**
PROCESS FOR IMPROVING THE COVERAGE OF RADIO CELLS IN A CELLULAR MOBILE RADIO SYSTEM AND DEVICE FOR IMPLEMENTING IT
PROCEDE DESTINE A L'AMELIORATION DE LA COUVERTURE DES CELLULES RADIO D'UN SYSTEME RADIOCELLULAIRE MOBILE ET DISPOSITIF D'APPLICATION DUDIT PROCEDE

(30) Priorität: 16.12.1991 DE 4141398
(43) Veröffentlichungstag der Anmeldung: 05.10.1994
(73) Patentinhaber: DETECON DEUTSCHE TELEPOST CONSULTING GmbH, 53175 Bonn (DE)
(72) Erfinder: SCHMIDT, Werner, Artur, Karl, Eugen, Boyle Roscommon (IE); STAHL, Hans-Joachim, D-5300 Bonn 2 (DE)
(74) Vertreter: Riebling, Peter, Dr.-Ing.
(86) Internationale Anmeldenummer: DE9200994
(87) Internationale Veröffentlichungsnummer: WO9312586

(56) Entgegenhaltungen:
- EP-B- 0 347 396
- WO-A-88/08650
- WO-A-91/07043
- FR-A- 2 438 389
- GB-A- 2 242 805
- US-A- 4 597 105
- US-A- 5 056 109
- 39TH IEEE VEHICULAR TECHNOLOGY CONFERENCE 1. Mai 1989, SAN-FRANCISCO (US) Seiten 625 - 603 , XP292054 V. PALESTINI 'EVALUATION OF OVERALL OUTAGE PROBABILITY IN CELLULAR SYSTEMS'
- IEEE INTERNATIONAL CONFERENCE ON COMMUNICATIONS 19. Juni 1983, BOSTON (US) Seiten 554 - 558 C-E. SUNDBERG 'Novel Antenna Configurations for Cellular Digital Mobile Radio Systems'
- Qualcomm Inc. An overwiew of the application of code division multiple access to digital cellular systems and personal communications networks ", 1991
- R.C Bernhard; Macroscopic Diversity in Frequenzcy Reuse Radio Radiosystems IEEE Journal on selected areas in communications , Vol SAC-5, Juni 1987 S.862-870

## Beschreibung

### Technisches Gebiet:

Die Erfindung betrifft ein Verfahren zur Verbesserung der Funkzellenausleuchtung bei einem Mobilfunksystem nach dem Oberbegriff des Patentanspruchs 1. Ein solches Verfahren ist aus der EP 0 347 396 B1 bekannt.

### Stand der Technik

Zellulare Mobilfunknetze sind dadurch gekennzeichnet, daß die zu versorgende Fläche in eine Anzahl von Zellen unterteilt ist, von denen jede durch eine Feststation versorgt wird. Jeder Zelle ist eine Kanalgruppe zugeordnet, die aus mehreren Kanälen besteht. Unter Kanälen werden im folgenden Sprechkanäle, auch Verkehrskanäle (engl. Traffic Channels TCH) genannt, verstanden, über welche Sprach- oder Datenverbindungen mit Mobilstationen abgewickelt werden. Dementsprechend handelt es sich hierbei um Duplex-Funkkanäle für die beiden Übertragungsrichtungen, also beispielsweise um ein Paar von Frequenzen mit einem festgelegten Duplex-Abstand. Kanäle und ebenso Kanalgruppen können durch die Kriterien Frequenz, Zeit oder Signalform (Code) getrennt sein, oder durch eine Kombination dieser Kriterien. Im folgenden wird für die Beschreibung des erfindungsgemäßen Verfahrens ohne Beschränkung der Allgemeinheit angenommen, daß eine Kanalgruppe aus einer oder mehreren (Duplex-) Frequenzen besteht, während die einzelnen Kanäle auf einer solchen Frequenz im Zeitvielfach (Zeitmultiplex) betrieben werden. Der Begriff Mobilstation umfaßt alle Arten von Geräten, also auch tragbare und handportable Teilnehmergeräte.

Um eine möglichst hohe Teilnehmerkapazität zu erzielen, sollen die Kanalgruppen möglichst häufig in der Fläche für unterschiedliche Verbindungen wiederbenutzt werden können, also in räumlich möglichst dicht benachbarten Zellen wiederholt werden (Frequenzwiederholungen bzw. Kanalwiederholungen, engl. channel reuse). Dabei muß andererseits sichergestellt werden, daß es nicht zu Gleichkanal-Interferenzen und damit zu gegenseitigen Störungen von Gesprächen kommt. Eine Anordnung von Zellen, innerhalb welcher die den Zellen zugeordneten Kanalgruppen alle gegenseitig verschieden sind, und welches sich räumlich mit derselben Zuordnung von Kanalgruppen zu Zellen lückenlos in der Fläche wiederholen läßt, wird Cluster genannt.

In Figur A ist eine 7er Cluster-Anordnung, bestehend aus Hexagonal-Omnizellen gezeigt. Bei einer derartigen Omnizellen-Anordnung sind die rundstrahlenden Sender jeweils in der Zellenmitte der jeweiligen Zelle angeordnet.

Wechselt eine Mobilstation (MS) während einer Verbindung von einer Zelle in eine Nachbarzelle, so muß vom System eine Übergabeprozedur vorgenommen werden. Sie wird "Weiterreichen" oder häufiger "Handover" (in USA auch "Handoff") genannt. In den herkömmlichen Netzen nach Figur A erfordert ein solcher Handover-Vorgang gleichzeitig sowohl die Umschaltung der Verbindung von einer Feststation zu einer anderen Feststation als auch den Wechsel von einem Funkkanal der bisherigen Zelle auf einen solchen der nächsten Zelle. Dabei kommt es häufig zu unerwünschten Mehrfachumschaltungen an den Zellgrenzen verbunden mit dem Risiko des Verlustes der Verbindung.

Es ist bekannt, daß sich durch Sektorisierung von Zellen, kurz Sektorzellen, mit entsprechenden Sektorantennen eine Verbesserung des Signal-Interferenz-Verhältnis bei gleicher Cluster-Größe oder aber eine Verkleinerung der Cluster-Größe bei gleichem Signal-Interferenz-Verhältnis erzielen läßt. Fig. Bund Fig. C zeigen Beispiele von Clustern mit Sektorzellen.

Fig. C zeigt ein Netz mit 60-Grad Sektorzellen. Jede hexagonale Zelle aus Fig. A ist durch 60-Grad Richtantennen in 6 dreieckförmige Sektoren unterteilt, die als eigenständige Zellen fungieren, und denen jeweils eigene Kanalgruppen zugeordnet sind. In dem dargestellten hexagonalen 3-er Cluster werden also 18 verschiedene Kanalgruppen vergeben. Der Vorteil gegenüber Fig. A liegt in der besseren Wiederholbarkeit der Kanäle durch die geringere Cluster-Größe von 3 anstelle von 7 bei etwa gleichem Signal-Interferenz-Verhältnis. Dieser Vorteil wird teilweise aber wieder aufgehoben durch den schlechteren Bündelgewinn wegen der 18 anstelle von 7 Kanalgruppen. Eine Versorgungsredundanz ist nicht vorhanden, d.h. jeder Punkt der Fläche wird eindeutig nur von einer Kanalgruppe versorgt.

Fig. B zeigt ein hexagonales 3-er Cluster mit 9 rautenförmigen Sektorzellen mit 120-Grad Richtantennen. Jeder Sektorzelle ist wie in Fig. C eine eigene Kanalgruppe zugeordnet, so daß hier im 3-er Cluster 9 Kanalgruppen benötigt werden. Allerdings ist das erzielbare Signal-Interferenz-Verhältnis schlechter als in Fig. C, weil die Hauptstrahlrichtung von Gleichkanalzellen in einer Linie liegen, während sie in Fig. C gegeneinander versetzt sind. Auch in diesem Netz gibt es keine Versorgungsredundanz.

Die Anordnung der Fig. A, B und C gehören zum Stand der Technik. Die entsprechenden Cluster sind demzufolge bekannt.

Außerhalb der Cluster 10,13 wiederholen sich bei homogenen Feldstärkeverteilungen dieselben Anordnungen, wobei die Feststationen 1-9 so senden, daß Interferenzstörungen (Verstärkung und Auslösung von Amplituden gleicher Wellenlänge) vermieden werden.

Mit der Anordnung derartiger Cluster 10,13 ist jedoch der Nachteil verbunden, daß nur eine geringe Anzahl von Kanalgruppen zur Verfügung gestellt werden kann, was die Ansteuerbarkeit von einer Vielzahl von sich in den jeweiligen Sektorzellen befindlichen Mobilstationen beschränkt.

Weiterer Nachteil des bekannten Cluster-Konzeptes mit Sektorzellen und im Randbereich der Sektorzellen angeordneten Sektorantennen ist, daß nur eine ungenügende Ausleuchtung der jeweiligen Sektorzelle von der im Randbereich angeordneten Feststation gegeben ist. Je weiter sich die Mobilstation von der Feststation entfernt, desto schlechter wird die Empfangsqualität, die zudem durch Interferenzen von Feststationen benachbarter Zellen beeinträchtigt wird.

Im übrigen ist die sogenannte Übergabe-Prozedur (Handover) bei den bekannten Sektorzellen gemäss Figur B erschwert, denn bei der nur ungenügenden Ausleuchtung der Sektorzellen durch im Randbereich angeordnete Feststationen kann es zu starken Schwankungen der Empfangsfeldstärke in der Mobilstation kommen, ohne daß diese bereits schon an die Feststation der benachbarten Sektorzelle übergeben wurde. Daher ist die bekannte Handover-Prozedur relativ unsicher und zeitkritisch.

Die EP 0 347 396 B1 offenbart eine Übergabeprozedur für ein zellulares Mobilfunknetz, wobei jede Funkzelle von mehreren Festsenderstandorten aus mit Funksignalen versorgt wird.

Hierbei bilden eine Anzahl von benachbarten und aneinander angrenzenden Zellen ein Cluster, wobei im Randbereich jeder Zelle mindestens eine Feststation mit mindestens einer Sektorantenne angeordnet ist. Es werden ferner die Aussendungen einer Mobilstation von der Feststation der Zelle, in der sich die Mobilstation befindet und von den Feststationen der angrenzenden Zellen empfangen.

Es soll bei einem Handover von einer Zelle in die andere möglichst der gleiche Kanal beibehalten werden. Ein Abgleich der Leistungen der Feststationen untereinander findet nicht statt, jedoch sind die Festsender benachbarter Zellen miteinander synchronisiert.

Die EP 0 347 396 B1 hat zum Ziel, in einem Mobilkommunikationssystem den Vorgang der Übergabe einer Verbindung (Handover) von einer Zelle zur nächsten sicherer zu machen, d.h. die Unterbrechung und das Risiko des Verlustes der Verbindung zu reduzieren, und die dafür notwendige Signalisierung zu reduzieren.

Weitere Ziele sind, daß die angegebene Methode des Handover besonders geeignet sein soll für solche Mobilkommunikationssysteme, in denen zwei oder mehr Feststationen im wesentlichen ähnliche Nachrichteninhalte (message information) an eine Mobilstation senden, und solche Systeme, die einen hohen Grad der Versorgung und große Überlappung der Versorgungsgebiete verschiedener Feststationen aufweisen. Es wird vorzugsweise derselbe Funkkanal zur Übertragung von Nachrichteninhalten an die Mobilstation sowohl vor als auch nach dem Handover benutzt. Die Übertragung von Nachrichten-Inhalten zur Mobilstation kann auch von einer zweiten Feststation begonnen werden, bevor eine weitere Feststation der zweiten Feststation zugeschaltet wird.

Mit dieser technischen Lehre wird lediglich die Funkversorgung während der relativ kurzen Phase des Handover von einer Zelle zu einer anderen beschrieben. Insgesamt ist hierbei eine definierte Überlappung der Zellen nicht vorgesehen. Es soll lediglich eine Unterbrechung und das Risiko des Verlustes der Verbindung beim Handover zwischen zwei Zellen beseitigt werden, indem während dieses relativ kurzen Vorgangs des Handovers mehrere Feststationen dieselben Nachrichteninhalte an eine Mobilstation senden, und zwar auf demselben Funkkanal.

Eine gleichmässige Ausleuchtung der gesamten Zelle während der gesamten Verbindungszeit (also auch außerhalb der Handover-Zeit) ist nicht vorgesehen.

Die US 4,597,105 offenbart ein Telekommunikationssystem mit sich überlappenden Zellen, wobei jeder Zelle eine Feststation zugeordnet ist. Es findet eine Leistungsregelung der Feststation in der Weise statt, daß die Feststation die von der Mobilstation ausgesendete Empfangsfeldstärke mißt und zwischen mehreren in die Zelle hineinsendenden Feststationen entschieden wird, welche Feststation sich am nächsten der Mobilstation befindet. Diese Feststation sendet dann allein zur Mobilstation, während die anderen Feststationen abgeschaltet sind. Es sind nicht mehrere Feststationen gleichzeitig und auf der gleichen Frequenz an der Versorgung einer Mobilstation beteiligt.

Mit der WO 88/08650 ist ein weiteres Telekommunikationssystem bekannt geworden, bei dem allerdings keine in Sektoren aufgeteilte Zellstruktur vorhanden ist. Es ist dort nicht gezeigt, daß die Feststationen benachbarter Zellen gleichzeitig und mit gleicher Frequenz wie die Feststation der zu versorgenden Zelle selbst, in diese Zelle senden.

Mit der Antragsschrift Qualcomm, Inc.: An Overview of the Application of Code Division Multiple Access to Digital Cellular Systems and Personal Communications Networks, 11. Januar 1991, ist ein weiteres Telekommunikationssystem nach dem CDMA-Prinzip (Code Division Multiple Access) arbeitet. Wie bei anderen Systemen wird auch hier für jede Verbindung ein Duplex-Kanal benutzt, der aus zwei Teilen (uplink und downlink) für die beiden Übertragungsrichtungen zwischen Feststation und Mobilstation besteht. Die Trennung der verschiedenen Kanäle untereinander erfolgt bei CDMA nicht durch unterschiedliche Trägerfrequenzen wie bei FDMA, sondern durch kanalindividuelle Spreizcodes, auf welche die Empfänger eingestellt werden. Alle Kanäle werden von der Feststation auf einem gemeinsamen HF-Träger ausgesendet. Die Mobilstationen benutzen ihrerseits ebenfalls dieselbe Trägerfrequenz, die sich von derjenigen der Feststation um den Duplex-Abstand (45 Mhz im 800/900 MHz-Band) unterscheidet.

Jede Feststation hat auf einer Trägerfrequenz bis zu 64 Kanäle zur Verfügung, die durch kanalindividuelle Codes (Walsh-Funktionen) unterschieden sind. Zusätzlich sind alle Kanäle, die in einer Feststation benutzt werden, durch einen PN-Code gekennzeichnet. Dieser PN-Code unterscheidet sich von Feststation zu Feststation, damit die Mobilstationen die Aussendungen verschiedener Feststationen unterscheiden und getrennt empfangen können. Jede Feststation besitzt also eine eigene Kanalgruppe im Sinne des CDMA-Prinzips, die von den Kanalgruppen benachbarter Feststationen unterschiedlich codiert ist. Diese Verhältnisse sind in (4), Kapitel 3.1.1 (insbes. Seite 15, 3. Abs., 1. Satz) dargestellt. Jede Feststation leuchtet eine Zelle aus. Wenn Richtantennen benutzt werden, so stellt jeder von einem Standort aus versorgte Sektor eine eigene Zelle mit einer eigenen Kanalgruppe dar. Bei dem beschriebenen Systeme enthält gemäss Kapitel 4.14.2 eine Mobilstation vier Empfängerzweige, von denen einer als Suchempfänger ausgebildet ist, der sich auf die Aussendungen der verschiedenen Feststationen synchronisieren kann. Die anderen drei sind Empfänger zur Auswertung der an die Mobilstation gesendeten Daten, deren Ausgangssignale zu einem resultierenden Gesamtsignal kombiniert werden. Im Normalzustand sind diese drei Empfänger auf denselben Kanal der versorgenden Feststation eingestellt, deren Signal durch Reflexionen im Funkfeld zu mehreren geringfügig unterschiedlichen Zeitpunkten bei der Mobilstation ankommen kann. In diesem Normalzustand einer Verbindung wird also eine Mobilstation von genau einer Feststation versorgt, und nur diese Feststation sendet auf dem ausgewählten Kanal Nachrichten an die Mobilstation.

Für den Wechsel einer Mobilstation von einer Zelle zu einer anderen während einer Verbindung sind zwei unterschiedliche Handover-Prozeduren dargestellt, vgl. Kapitel 4.9.4 und 4.14.2. Im ersten Fall wird, auf Anfrage der Mobilstation, in der neuen Feststation ein neuer Kanal für die Verbindung zugewiesen, die Mobilstation schaltet auf diesen Kanal um, d. h. alle Empfänger werden auf die Codes der neuen Feststation und des neuen Kanals umgestellt, und die alte Feststation beendet ihre Aussendung für diese Verbindung. Vom Ablauf her entspricht dieser Fall dem Kanalwechsel in anderen Systemen. Im zweiten Fall ("cell-site diversity mode") wird, wiederum auf Anfrage der Mobilstation, in der neuen Feststation ein neuer Kanal für die Verbindung zugewiesen und darauf die Aussendung der Informationen an die Mobilstation begonnen. Die Mobilstation schaltet einen oder zwei Empfänger auf den neuen Kanal in der neuen Feststation um, beläßt aber den oder die restlichen Empfänger auf dem Empfang des bisherigen Kanals. Bei dieser Art des Handover erhält die Mobilstation also für eine gewisse Zeit die gleiche Information sowohl über den bisherigen Kanal, als auch über den neuen Kanal der neuen Feststation. Dieser Zustand hält solange an, bis die Mobilstation der Festseite mitteilt, daß sie praktisch ausschließlich von einer der beiden Feststationen versorgt wird und daraufhin die andere Feststation ihre Aussendungen an diese Mobilstation beendet.

Ein CDMA-System mit vielen Teilnehmern ist vom Prinzip her darauf angewiesen, daß am Empfänger alle Signale, die ausgewertet werden sollen, mit gleicher Leistung ankommen, weil die Selektion jedes einzelnen Signals durch eine Korrelation mit dem jeweiligen kanalindividuellen Code erfolgt. Wenn ein Signal stärker ist als die anderen, so läßt sich dieses eine Signal zwar besser decodieren, dafür sind aber alle anderen Signale durch dieses eine Signal stärker gestört. Je mehr Teilnehmer bedient werden sollen, d. h. je höher die Kapazität ist, desto genauer muß diese Forderung nach gleicher Empfangsleistung eingehalten werden.

Eine kanalindividuelle Leistungsregelung der Feststation ist für diese Leistungsbalance schädlich.

Die Mobilstation mißt die Leistung des für sie bestimmten Nutzsignals im Verhältnis zur Leistung aller anderen Störsignale. Bei Bedarf kann sie bei der Feststation die Erhöhung oder Reduzierung der Sendeleistung ihres Signals beantragen. Je nach Verkehr und den Anträgen anderer Mobilstationen kann die Feststation einer solchen Aufforderung nachkommen oder nicht. Sowohl die Stufung (12 % entsprechend 0,5 dB, oder weniger) als auch der Gesamtbereich (-6 dB bis +6 dB) sind daher sehr niedrig angesetzt.

Es ist nicht bekannt, daß mehrere benachbarte Feststationen mit derselben Kanalgruppe in eine Zelle hinein senden. In dem bekannten CDMA-System werden die einzelnen Kanäle nicht durch Frequenzen, sondern durch unterschiedliche Codierung separiert.

Mit der US 5,056,109 ist eine Leistungsregelung von einzelnen Festsendern in CDMA-Systemen bekannt geworden. Ein Hinweis auf eine koordinierte Leistungsregelung von mehreren Sendern beim Senden in eine Funkzelle gibt diese Druckschrift nicht.

Mit der Veröffentlichung IEEE Journal On Selected Areas in Communications Nr. 5, Juni 1987, Seite 862 bis 870, ist lediglich ein Verfahren bekannt geworden, mit dem eine Mehrwegeausbreitung von Funksignalen und deren gezielten Nutzung durch sogenannten Diversity-Empfang bekannt geworden ist. Mehrere rundstrahlende Feststationen sind räumlich getrennt angeordnet, die eine Zelle auf unterschiedlichen Frequenzen (Kanälen) versorgen, wobei jeweils nur die Feststation mit der größten Sendefeldstärke mit der Mobilstation kommuniziert.

### Darstellung der Erfindung

Der Erfindung liegt deshalb die Aufgabe zugrunde, ein Verfahren der eingangs genannten Art so weiterzubilden, daß eine verbesserte Funkzellenausleuchtung mit einer vereinfachten und störungsfreien Handover-Prozedur erreicht werden kann.

Zur Lösung der gestellten Aufgabe ist die Erfindung durch die technische Lehre des Anspruchs 1 gekennzeichnet.

Merkmal des erfindungsgemäßen Verfahrens ist, daß jeder Kanal in jeder Feststation mit einer individuellen, regelbaren Leistung sendet, wobei die jeweilige Leistung einer Feststation auf diesem Kanal proportional zum Beitrag der Sendeleistung dieser Feststation am Empfängereingang der Mobilstation eingestellt wird, und daß die Aussendungen einer Mobilstation von der Feststation der Zelle, in der sich die Mobilstation befindet und von den Feststationen der angrenzenden Zellen empfangen werden und daß zwischen diesen Feststationen ein Abgleich der Sendeleistungen stattfindet, in der Weise, daß die Feststationen mit einem Teil ihrer Leistungen senden, die dem Fahrzeug am nächsten liegen, während die Feststationen, die der Mobilstation enfernt sind, mit einem kleineren Teil ihrer Leistung senden oder vollständig abgeschaltet sind.
Dadurch wird sichergestellt, daß jede Mobilstation, die sich in einer Zelle befindet, nicht nur von der einen, in der Sektorzelle selbst befindlichen, Feststation versorgt wird, sondern auch von den Feststationen benachbarter Zellen.

Jeder Feststation wird nicht mehr eine 120°-Sektorantenne zugeordnet, sondern nunmehr 6, die sich in ihrem Strahlungsbereich um je 60° überlappen. Jedem der 6 Sektoren einer Feststation ist eine eigene Kanalgruppe zugeordnet. Einander zugewandte Sektoren benachbarter Feststationen besitzen dieselbe Kanalgruppe und sind miteinander synchronisiert. Jede MS wird im Prinzip immer von den drei nächstliegenden Feststationen neu versorgt. Jeder Kanal in jeder Feststation ist mit einer individuellen Leistungszuordnung versehen, wobei die jeweilige Leistung einer Feststation auf diesem Kanal proportional zu ihrem Beitrag am Empfängereingang der MS eingestellt wird, mit der zusätzlichen Randbedingung, daß die Summenleistung am Empfängereingang gerade über dem minimal tolerierbaren Signal-Interferenz-Abstand für eine definierte Übertragungsqualität unter Fading-Bedingungen liegt (adaptive Leistungszuordnung). Die Aussendungen jeder Feststation auf jedem Kanal werden nach einem getrennten Erfindungsgegenstand so vorverzerrt, daß der Übertragungsweg zur MS als Entzerrer wirkt. Damit ist der Beitrag jeder Feststation am Empfängerort optimal entzerrt und die Einzelbeiträge überlagern sich zeitgleich. Die Aussendungen jeder Mobilstation werden grundsätzlich in den drei nächstliegenden Feststationen empfangen und anschließend einem Diversity-Combining zugeführt.

Das bedeutet, daß zwischen den auf gleicher Kanalgruppe sendenden Feststation untereinander entschieden wird, welche Feststation mit welcher Sendeleistung in die auszuleuchtende Zelle hineinsenden darf.

Befindet sich das Fahrzeug nun beispielsweise im Mittenbereich zwischen zwei Feststationen, aber entfernt von der dritten Feststation, dann wird die Leistung der einzelnen Feststationen so geregelt, daß die beiden, dem Fahrzeug am nächsten liegenden Feststationen mit jeweils einem Teil ihrer Leistung senden, während die dritte Feststation abgeschaltet wird.

Damit besteht der wesentliche Vorteil, daß eine optimale Funkzellenausleuchtung der jeweiligen Zelle erfolgt, weil die Zelle von mehreren Seiten her ausgeleuchtet wird, was bisher nicht möglich war.

Auch die Mobilstationen sich leistungsgeregelt unter Steuerung von der Festseite, um auch hier die Bedingung nach dem minimal tolerierbaren Signal-Interferenz-Verhältnis einzuhalten. Die Parameter für die Leistungsregelung lassen sich genügend genau aus der jeweiligen Empfangsleistung berechnen.

Insgesamt entsteht bei dieser Netzkonfiguration ein Zellenmuster wieder mit abstrahierten hexagonalen Zellen, die ineinander verschachtelt sind und von denen jeder eine eigene Kanalgruppe zugeordnet ist.

Die Zellen werden von je drei der sechs Ecken durch Feststationen ausgeleuchtet und überdecken sich gegenseitig je zu einem Drittel. Dadurch wird letztlich jede solche Zelle durch zwei Kanalgruppen abgedeckt.

In einem solchen Netz gibt es zwei Formen des Handover. Erstens einen implizierten oder "weichen" Handover, der durch die adaptive Leistungszuweisung auf der Festseite entsteht und den die MS nicht erkennt. Er geschieht durch den fließenden Übergang zwischen den 3 Feststationen, die eine Zelle mit derselben Kanalgruppe bedienen. Dabei bleiben mindestens eine oder zwei der Feststationen nach wie vor an der Verbindung beteiligt. Ein Kanalwechsel findet nicht statt.

Zweitens einen konventionellen Handover mit Kanalwechsel im Überlappungsbereich zwischen zwei Zellen, der also immer in Gebieten stattfindet, die in der Regel von zwei Feststationen auf sowohl dem alten als auch dem neuen Kanal gleich gut versorgt werden und die nicht mit Sektorgrenzen oder herkömmlichen Funkzonengrenzen zusammenfallen. Daher ist dieser Handover weder unsicher, noch zeitkritisch.

Die Leistungsregelung der Feststationen wird mittels mathematischem Algorithmus bestimmt. Vorteile:
- Es entstehen 3-er Cluster mit einem erheblichen Gewinn an Frequenzökonomie
- Die Handoverprozeduren verlaufen "unbemerkt" und völlig problemfrei.
- Die Dienstgüte gemäß Vorschlag ist wesentlich höher als in bisher bekannten Netzen.

Der Erfindungsgegenstand der vorliegenden Erfindung ergibt sich nicht nur aus dem Gegenstand der einzelnen Patentansprüchen, sondern auch aus der Kombination der einzelnen Patentansprüche untereinander.

### Kurze Beschreibung der Zeichnungen

Im folgenden wird die Erfindung anhand von lediglich einen Ausführungsweg darstellende Zeichnungen näher erläutert.

Hierbei gehen aus den Zeichnungen und ihrer Beschreibung weitere erfindungswesentliche Merkmale und Vorteile der Erfindung hervor.

Es zeigen:
- Figur A:: Omnizellen nach dem Stand der Technik,
- Figur B:: Sektorzelle mit 120-Grad Sektoren nach dem Stand der Technik,
- Figur C:: Dreiecks-Zellen mit 60-Grad Sektoren nach dem Stand der Technik
- Figur 1:: ein hexagonales Zellenmuster mit Randausleuchtung nach der Erfindung,
- Figur 2:: die mittlere Zelle nach Figur 1 in vergrößerter Darstellung mit weiteren Einzelheiten,
- Figur 3:: erfindungsgemäßes Netz mit 120-Grad Sektorantennen und hexagonalen Zellen mit Randausleuchtung und Mehrfachüberdeckung nach der Erfindung,
- Figur 4:: Handover mit Kanalwechsel im Überlappungsbereich zweier Zellen nach der Erfindung,
- Figur 5:: Belegung der Antennen mit sechs Kanalgruppen bei einem 3-er Cluster nach der Erfindung.

Die Figuren A, B und C wurden bereits in der Beschreibungseinleitung als zum Stand der Technik gehörende Cluster-Konzepte beschrieben. Gemäss Figur B ist es beispielsweise bekannt, daß die dort gezeigten Feststationen 1,2,3,4 die Sektorzellen 20 bis 23 mit einer einzigen Sektorantenne und einem Winkel von 120° ausstrahlen, was mit dem Nachteil behaftet ist, daß - je weiter sich das Fahrzeug in der betreffenden Sektorzelle 20-23 von der zugeordneten Feststation 1-4 entfernt - je schlechter wird die Empfangsqualität.

Je mehr sich das Fahrzeug einer anderen Feststation in einer benachbarten Sektorzelle annähert, desto größer ist dann die Gefahr, daß es zu Interferenzen zwischen der Kanalgruppe in der einen Sektorzelle (z.B. der Sektorzelle 20) und der gleichen Kanalgruppe in einer Sektorzelle eines benachbarten Clusters (z.B. der Sektorzelle 20a) kommt.

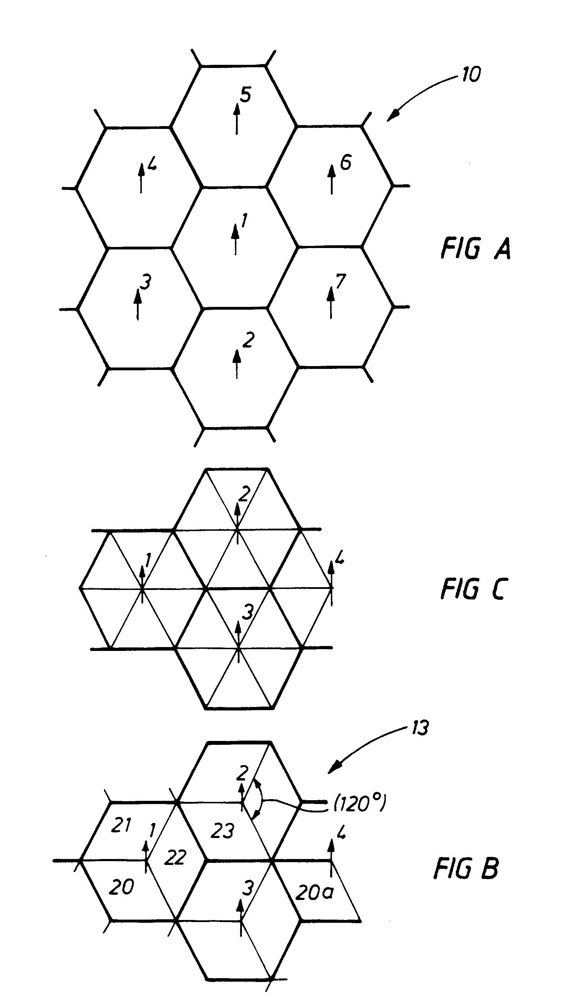

Nach der Erfindung wird gemäss Figur 1 ein neuartiges Zellen-Konzept vorgeschlagen, welches beispielsweise mit sechs um jeweils 60° überlappende Antennen arbeitet, wobei die Antennenstrahlen der jeder Feststation 1,2,3 zugeordneten Antennen in Figur 1 nur schematisiert dargestellt sind.

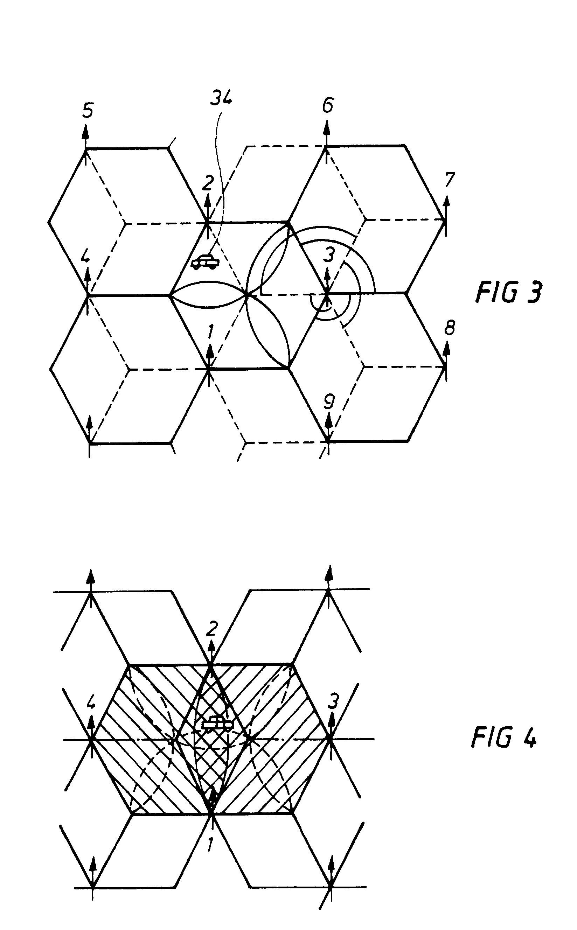

Die Figur 1 soll zeigen, daß - wenn sich eine Mobilstation beispielsweise in der Zelle 20 befindet - diese Mobilstation (Fahrzeug 34 - Figur 3) nicht nur von der der Zelle 20 direkt zugeordneten Feststation 1 versorgt wird, sondern darüber hinaus auch noch von der Feststation 2 und zum dritten auch noch von der Feststation 3.

In analoger Weise gilt dieses Konzept für alle anderen benachbarten Zellen 22,24,25,26.

### Weg zur Ausführung der Erfindung

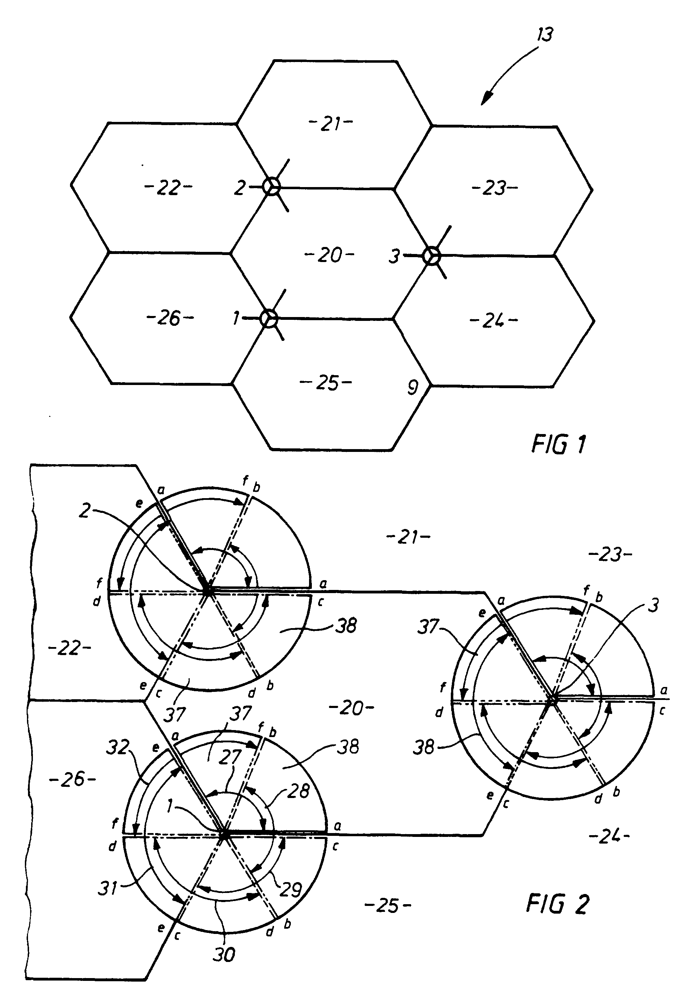

Anhand eines Ausführungsbeispiels mit Sektorantennen, die mit einem Sektorwinkel 12 von 120° strahlen, soll das in Figur 1 schematisierte Beispiel anhand der Figur 2 und 3 näher erläutert werden.

Hierbei ist der zeichnerischen Vereinfachung halber angenommen, daß sechs Antennen A,B,C,D,E,F vorhanden sind und jede der Antennen A-F einen Sektorwinkel a-a bzw. b-b bzw. c-c und so weiter bis f-f- überstreicht.

Die der Zelle 20 zugeordnete Feststation 1 hat demzufolge sechs Antennen, die gleichmässig verteilt am Umfang eines Vollkreises senden und demzufolge nicht nur in die Zelle 20 hineinsenden, sondern genauso in die benachbarten Zellen 25 und 26. Zusätzlich versorgt sie noch drei weitere Zellen, deren hexagonale Begrenzung in Figur 3 mit unterbrochenen Linien dargestellt sind, und von denen zwei die mittlere Zelle 20 zu je einem Drittel überlappen.

Das gleiche gilt für die Feststationen 2 mit ihren Sektorantennen, die ebenfalls nicht nur in die eigene Zelle 21 hineinstrahlen, sondern auch in die Zelle 20 und in die benachbarte Zelle 22. Auch diese Feststation 2 versorgt zusätzlich drei weitere überlappende Zellen.

Analog gilt dies auch für die Feststation 3.

Hieraus ergibt sich - bezogen auf die zu betrachtende Zelle 20 - daß ein in der Zelle 20 befindliches Fahrzeug 34 von drei verschiedenen Feststationen 1 - 3 mit Sendeenergie versorgt wird.

Insgesamt werden dadurch unter Verwendung von sechs Kanalgruppen zwei ineinander verschachtelte und gegenseitig überlappende 3-er Cluster gebildet, die um einen Zellradius gegeneinander verschoben sind, wie in Figur 3 dargestellt, Dabei ist darauf hinzuweisen, daß das erfindungsgemässe Netz die gleiche Anzahl von Feststationen besitzt wie die bekannten Anordnungen der Figuren A, B und C, also ohne eine Erhöhung der Zahl der Standorte auskommt.

Die Anzahl der möglichen Frequenzen wird nun durch die beschriebene Überlappung der Antennen A-F erreicht. Jede Antenne A-F sendet mit einem Sektorwinkel 27-32, der im Ausführungsbeispiel mit 120° angegeben ist. In einer anderen Ausführungsform der Erfindung kann dieser Sektorwinkel auch 90° (bei einer gegenseitigen Überlappung von 45°) betragen oder auch 60° (bei einer gegenseitigen Überlappung von 30°).

Am Beispiel der Figur 2 wird im Hinblick auf die Feststation 1 dargelegt, daß beispielsweise sich die Antenne A mit der Antenne B im Überlappungsbereich 38 überlappt. Ebenso überlappt sich die Antenne A mit der Antenne F im Überlappungsbereich 37.

Eine Überlappung ist deshalb möglich, weil die Antenne A mit einer anderen Frequenz als beispielsweise die Antenne B oder die Antenne F sendet. Dadurch ist die Anzahl der möglichen Gespräche im Gebiet der Zelle 20 stark erhöht, weil man sowohl mit der einen Kanalgruppe, z.B. 16 Sprachkanäle, zur Verfügung hat, als auch mit der anderen Kanalgruppe, die ebenfalls in die Zelle 20 hineinsendet.

Es versteht sich von selbst, daß die gleichen Verhältnisse auch für die anderen Sektorantennen der Feststationen 2,3 bestehen müssen. Das heisst, bezogen auf die Feststationen 2 überlappen sich bezüglich der Zelle 20 die Antennen C mit B und C mit D und es versteht sich von selbst, daß diese Antennen jeweils auf der gleichen Kanalgruppe senden, wie die vorher am Beispiel der Feststatione 1 beschriebenen Antennen, um ein im Gebiet der Zelle 20 befindliches Fahrzeug gleichmässig mit den jeweilig erzeugten Sendefrequenzen zu versorgen.

Die gleichen Darlegungen gelten im übrigen für die Sektorantennen der Feststation 3.

Anhand der Figur 4 soll eine sogenannte Handover-Prozedur beim Übergang von einer Zelle 20 in eine benachbarte überlappende Zelle erläutert werden.

Hierbei wird angenommen, daß sich das Fahrzeug 34 etwa im Mittenbereich zwischen den beiden Feststationen 1,2 befindet und am weitesten entfernt von der Feststation 3 ist. Zwischen den genannten Feststationen 1,2,3 findet nun eine Absprache statt mit dem Ziel, festzulegen, welche der Feststationen mit welcher Leistung befugt ist, mit der Mobilstation (Fahrzeug 34) zu kommunizieren. Nachdem das Fahrzeug 34 die Sendestrahlen 18,19 von den beiden Feststationen 1,2 am stärksten empfängt und den Sendestrahl 36 von der Feststation 3 nur schwach empfängt, wird die Feststation 3 abgeschaltet, während die beiden anderen Feststationen 1,2 jeweils mit etwa 1/3 ihrer zur Verfügung stehenden Leistung senden. Als "zur Verfügung stehende Leistung" wird hierbei eine Leistung definiert, die ausreichen würde, mit einer einzigen Feststation den gesamten Bereich der Zelle 20 zu versorgen, etwa bei einer Mittenanordnung nach Figur A.

Nach dem erfindungsgemäßen Verfahren wird innerhalb einer hexagonalen Zelle das Weiterreichen einer Verbindung von einer Feststation zu einer anderen auf dem Funkweg durch die oben dargestellte adaptive Leistungszuordnung bewerkstelligt, ohne daß ein Wechsel des Funkkanals vorgenommen werden muß.

Die Leistungszuordnung wird mittels mathematischem Algorithmus bestimmt.

Bewegt sich die Mobilstation (Fahrzeug 34) von einer Zelle in eine benachbarte überlappende Zelle, so wird ein Handover mit Kanalwechsel durchgeführt, In Figur 4 ist die durch die Feststationen 1,2 and 3 versorgte Zelle 20 durch die beiden Kanten 16 und 17 seitlich begrenzt, während sich die benachbarte überlappende Zelle, die von den Feststationen 1,2 und 4 versorgt ist, mit den Kanten 14 und 15 in die Zelle 20 hineinerstrecken.

Im Übergangsbereich zwischen diesen beiden Zellen ergibt sich somit eine Übergabezone 33, die aufgrund der Sendestrahlen 18,19 der Feststationen 1,2 etwa ellipsenförmig ausgebildet ist. Das Fahrzeug 34 bewegt sich hierbei in Pfeilrichtung 35 aus der Zelle 20 heraus in Richtung auf die Feststation 4.

Diese Bewegung wird durch die Kontrolle zwischen den einzelnen Feststationen 1,2,3 festgestellt und der Sendestrahl 36 der Feststation 3 unterbrochen, wobei die Mobilstation 34 nur noch durch die Feststationen 1,2 zu etwa gleichen Teilen versorgt wird.

In diesem ausgedehnten ellipsenförmigen Gebiet kann nun ein Handover mit Wechsel des Funkkanals vorgenommen werden. Er findet also immer in Gebieten statt, die in der Regel von zwei Feststationen auf sowohl dem alten als auch dem neuen Kanal gleich gut versorgt werden und die nicht mit Sektorgrenzen oder herkömmlichen Zellgrenzen zusammenfallen. Daher ist dieser Handover-Vorgang im Gegensatz zu bisherigen Netzen nach dem erfindungsgemäßen Verfahren sicher und zeitunkritisch und nicht an exakte Orte gebunden. Auf diese Weise können auch die unerwünschten Mehrfachumschaltungen vermieden werden. Selbstverständlich gilt der beschriebene Ablauf in gleicher Weise für beliebige Bewegungsrichtungen einer Mobilstation und deren Übergang in irgend eine andere benachbarte überlappende Zelle.

Neben der Sicherheit dieser Prozedur ist als weiterer Vorteil zu nennen, daß die Grenzen, innerhalb derer die Kanalgruppe einer Zelle tatsächlich benutzt wird, reduziert werden auf die abschnittweise etwa ellipsenförmigen äußeren Handover-Grenzen zwischen je zwei Feststationen, wie sie in Figur 4 zwischen den Feststationen 1 und 2 eingezeichnet sind. Dadurch werden die Signal-Interferenz-Verhältnisse im Netz noch zusätzlich verbessert.

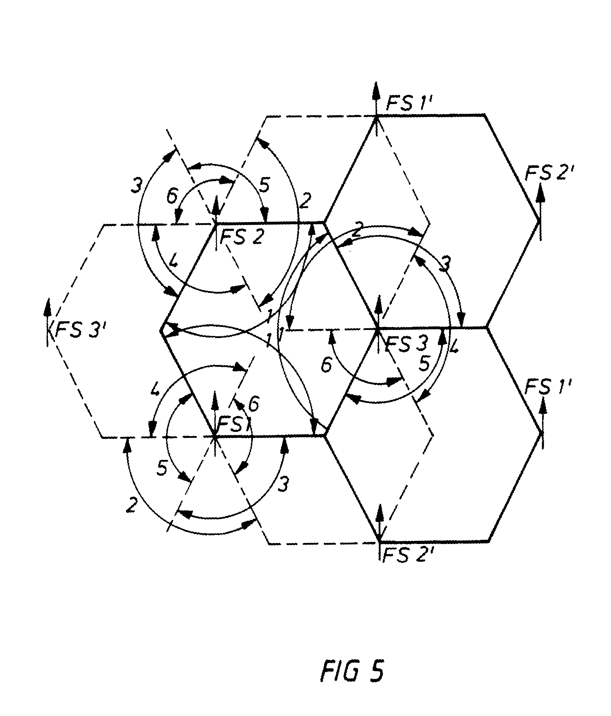

Figur 5 schließlich zeigt die Zuordnung der für ein 3-er Cluster erforderlichen sechs Kanalgruppen 1 bis 6 zu den 120-Grad Sektorantennen der Feststationen FS1 bis FS3 in einem solchen flächenmäßig fortsetzbaren 3-er Cluster. Dabei haben die FS 1' dieselbe Antennenbelegung wie FS 1. Dies gilt sinngemäß für die FS 2' und FS 3'.

### Gewerbliche Anwendbarkeit

Zum Schluß seien als wesentliche Vorteile eines Netzes gemäß einzelner oder mehrerer Patentansprüche nach der Erfindung genannt:
- Verbesserung der Versorungssicherheit durch Mehrfachüberdeckung
- Reduzierung der Sendeleistungen von Feststationen und Mobilstationen durch Sender- und Empfängerdiversity auf der Festseite
- Verbesserung der Signal-Interferenz-Verhältnisse im Netz, die sich in eine Verringerung des Gleichkanal-Wiederholabstandes umsetzen läßt
- sichere, zeit- und ortsunkritische Handover-Prozedur ohne Risiko des Verlustes bestehender Verbindungen
- bessere Auslastbarkeit der Kanäle (Bündelgewinn) durch geringere Zahl von Kanalgruppen, d.h. mehr Kanäle pro Kanalgruppe, und durch Versorgungsredundanz.

Diese Merkmale führen zu einer wesentlichen Steigerung der Frequenzökonomie, also der Zahl bedienbarer Teilnehmer in einem begrenzten zur Verfügung stehenden Frequenzband, und einer Verbesserung der den Teilnehmern gebotenen Dienstgüte durch verbesserte Versorgung und sichere Handover-Abläufe, ohne eine Erhöhung der Zahl von Feststationen zur Folge zu haben.

### Zeichnungs-Legende

- 1: Feststation
- 2: "
- 3: "
- 4: "
- 5: "
- 6: "
- 7: "
- 8: "
- 9: "
- 10: Cluster

- 12: Sektorwinkel
- 13: Cluster
- 14: Kante
- 15: Kante
- 16: Kante
- 17: Rante
- 18: Sendestrahl
- 19: Sendestrahl
- 20: Zelle
- 20a: Gleichkanal-zelle
- 21: Zelle
- 22: Zelle
- 23: Zelle
- 24: Zelle
- 25: Zelle
- 26: Zelle
- 27: Sektorwinkel Antenne A
- 28: Sektorwinkel Antenne B
- 29: Sektorwinkel Antenne C
- 30: Sektorwinkel Antenne D
- 31: Sektorwinkel Antenne E
- 32: Sektorwinkel Antenne F
- 33: Übergabe-Zone
- 34: Fahrzeug (Mobilstation)
- 35: Pfeilrichtung
- 36: Sendestrahl
- 37: Überlappungsbereich
- 38: Überlappungsbereich

## Patentansprüche

1. Verfahren zur Verbesserung der Funkzellenausleuchtung bei einem zellularen Mobilfunksystem, bei dem eine Anzahl von benachbarten und aneinander angrenzenden Zellen (20-26) ein Cluster (10,13) bilden, wobei im Randbereich jeder Zelle (20) mindestens eine Feststation (1) mit mindestens einer Sektorantenne angeordnet ist, und wobei die Aussendungen einer Mobilstation (34) von der Feststation (1) der Zelle (20), in der sich die Mobilstation (34) befindet, und von den Feststationen (2,3) der angrenzenden Zellen empfangen werden, **dadurch gekennzeichnet, daß** jede Sektorantenne mindestens den Bereich der Zelle (20) mit Funkfrequenzen einer Kanalgruppe überstreicht, wobei die Feststationen (2,3) benachbarter, unmittelbar an eine Zelle (20) angrenzender Zellen (21,23) mit der gleichen Kanalgruppe in diese Zelle (20) senden, wie die Feststation (1) der zu versorgenden Zelle (20) selbst, und daß jeder Kanal in jeder Feststation (1,2,3) mit einer individuellen, regelbaren Leistung sendet, wobei die jeweilige Leistung einer Feststation (1,2,3) auf diesem Kanal proportional zum Beitrag der Sendeleistung dieser Feststation (1,2,3) am Empfängereingang der Mobilstation (34) eingestellt wird, und daß zwischen den Feststationen (1,2,3) ein Abgleich der Sendeleistungen stattfindet, in der Weise, daß die Feststationen mit einem Teil ihrer Leistung senden, die der Mobilstation (34) am nächsten liegen, während die Feststationen, die der Mobilstation (34) entfernt sind, mit einem kleineren Teil ihrer Leistung senden oder vollständig abgeschaltet sind.

2. Verfahren zur Verbesserung der Funkzellenausleuchtung bei einem zellularen Mobilfunksystem, bei dem eine Anzahl von benachbarten und aneinander angrenzenden Zellen (20-26) ein Cluster (10,13) bilden, wobei im Randbereich jeder Zelle (20) mindestens eine Feststation (1) mit mindestens einer Sektorantenne angeordnet ist, **dadurch gekennzeichnet, daß** jede Sektorantenne mindestens den Bereich der Zelle (20) mit Funkfrequenzen einer Kanalgruppe überstreicht, wobei die Feststationen (2,3) benachbarter, unmittelbar an eine Zelle (20) angrenzender Zellen (21,23) mit der gleichen Kanalgruppe in diese Zelle (20) senden, wie die Feststation (1) der zu versorgenden Zelle (20) selbst und daß jeder Kanal in jeder Feststation (1,2,3) mit einer individuellen, regelbaren Leistung sendet, wobei die jeweilige Leistung einer Feststation (1,2,3) auf diesem Kanal eingestellt wird proportional zu der von der Mobilstation (34) am Empfängereingang dieser Feststation (1,2,3) empfangenen Leistung.

3. Verfahren nach Anspruch 1 oder 2, **dadurch gekennzeichnet, daß** die Feststationen (1,2,3) miteinander synchronisiert sind.

4. Verfahren nach einem der Ansprüche 1 bis 3, **dadurch gekennzeichnet, daß** jede Mobilstation (34, die sich in einer der Zellen (20-26) befindet, von höchstens drei verschiedenen Feststationen (1,2,3) gleichzeitig versorgt wird.

5. Verfahren nach einem der Ansprüche 1 bis 4, **dadurch gekennzeichnet, daß** die Sendeleistung der Feststationen (1,2,3) so eingestellt werden, daß ihre Summenleistung am Empfängereingang der Mobilstation (34) gerade über dem minimalen, tolerierbaren Signal-Interferenz-Abstand für eine definierte Übertragungsqualität unter Fading liegt.

6. Verfahren nach einem der Ansprüche 2 bis 5, **dadurch gekennzeichnet, daß** die Aussendungen einer Mobilstation (34) von der Feststation (1) der Zelle (20), in der sich die Mobilstation (34) befindet und von den Feststationen (2,3) der angrenzenden Zellen empfangen werden und daß zwischen diesen Feststationen (1,2,3) ein Abgleich der Sendeleistungen stattfindet, in der Weise, daß die Feststationen mit einem Teil ihrer Leistungen senden, die der Mobilstation (34) am nächsten liegen, während die Feststationen, die der Mobilstation (34) entfernt sind, mit einem kleineren Teil ihrer Leistung senden oder vollständig abgeschaltet sind.

7. Verfahren nach einem der Ansprüche 1 bis 6, **dadurch gekennzeichnet, daß** die Aussendungen einer Mobilstation (34) von der Feststation (1) der Zelle, in der sich die Mobilstation (34) befindet, und von den Feststationen (2,3) der angrenzenden Zellen (21,23) empfangen werden und daß diese empfangenen Signale zur Verbesserung der Qualität einem Diversity-Combining Verfahren unterzogen werden.

8. Verfahren nach einem der Ansprüche 1 bis 7, **dadurch gekennzeichnet, daß** die Übergabeprozedur, Handover, einer im Verbindungszustand befindlichen Mobilstation (34) von einem Sektor einer Zelle (20) zu einem benachbarten Sektor dieser Zelle durch eine adaptive Leistungszuweisung der Feststationen (1,2,3), welche die Zelle ausleuchten, erfolgt.

9. Verfahren nach einem der Ansprüche 1 bis 8, **dadurch gekennzeichnet, daß** die Übergabeprozedur, Handover, einer im Verbindungszustand befindlichen Mobilstation (34) von einer Zelle zu einer benachbarten Zelle durch einen Kanalwechsel erfolgt derart, daß mindestens eine der Feststationen (1 oder 2 oder 3, oder 1 und 2, oder 1 und 3, oder 2 und 3) sowohl vor als auch nach der Übergabeprozedur an der Verbindung beteiligt ist.

10. Vorrichtung zur Funkzellenausleuchtung bei einem zellularen Mobilfunksystem, bestehend aus einer oder mehreren jeweils ein Cluster bildenden Zellen, wo im Randbereich jeder Zelle mindestens eine Feststation angeordnet ist, welche mindestens eine Sektorantenne aufweist, und die Feststationen miteinander synchronisiert sind, **dadurch gekennzeichnet, daß** jede Feststation mindestens den Bereich dieser Zelle (20) mit einer Kanalgruppe überstreicht, wobei jedem der Sektoren einer Feststation eine eigene Kanalgruppe zugeordnet ist und einander zugewandte Sektoren benachbarter Feststationen dieselbe Kanalgruppe besitzen und daß jeder Feststation (1 bis 9) insgesamt sechs Sektorantennen (A bis F) mit jeweils einem Sektorwinkel (27-32) von 120° zugeordnet sind und daß sich die Sendebereiche der Sektorantennen (A bis F) um jeweils 60° überlappen und einen Bereich von 360° überstreichen.

11. Vorrichtung zur Funkzellenausleuchtung bei einem zellularen Mobilfunksystem, bestehend aus einer oder mehreren jeweils ein Cluster bildenden Zellen, wo im Randbereich jeder Zelle jeweils mindestens eine Feststation angeordnet ist, welche mindestens eine Sektorantenne aufweist, und die Feststationen miteinander synchronisiert sind, **dadurch gekennzeichnet, daß** jede Feststation mindestens den Bereich dieser Zelle (20) mit einer Kanalgruppe überstreicht, wobei jedem der Sektoren einer Feststation eine eigene Kanalgruppe zugeordnet ist und einander zugewandte Sektoren benachbarter Feststationen dieselbe Kanalgruppe besitzen und daß jeder Feststation (1 bis 9) insgesamt acht Sektorantennen mit jeweils einem Sektorwinkel von 90° zugeordnet sind, und daß sich die Sendebereiche der Sektorantennen um jeweils 45° überlappen und einen Bereich von 360° überstreichen.

12. Vorrichtung zur Funkzellenausleuchtung bei einem zellularen Mobilfunksystem, bestehend aus einer oder mehreren jeweils ein Cluster bildenden Zellen, wo im Randbereich jeder Zelle jeweils mindestens eine Feststation angeordnet ist, welche mindestens eine Sektorantenne aufweist, und die Feststationen miteinander synchronisiert sind, **dadurch gekennzeichnet, daß** jede Feststation mindestens den Bereich dieser Zelle (20) mit einer Kanalgruppe überstreicht, wobei jedem der Sektoren einer Feststation eine eigene Kanalgruppe zugeordnet ist und einander zugewandte Sektoren benachbarter Feststationen dieselbe Kanalgruppe besitzen und daß jeder Feststation (1 bis 9), insgesamt zwölf Sektorantennen mit jeweils einem Sektorwinkel von 60° zugeordnet sind, und daß sich die Sendebereiche der Sektorantennen um jeweils 30° überlappen und einen Bereich von 360° überstreichen.

13. Vorrichtung nach einem der Ansprüche 10 bis 12, **dadurch gekennzeichnet, daß** die Sendeleistung jedes Kanals in jeder Feststation (1,2,3) regelbar ist in Abhängigkeit von der empfangenen Leistung von der Mobilstation (34) am Empfängereingang dieser Feststation (1,2,3), und bezogen auf die jeweilige Sendeleistung dieser Mobilstation eingestellt wird.

14. Vorrichtung nach einem der Ansprüche 10 bis 13, **dadurch gekennzeichnet, daß** jede Feststation (1 bis 3) nur mit einem Bruchteil der Leistung sendet, die notwendig wäre, die gesamte Zelle (20) mit Sendeleistung zu versorgen.

## Claims

1. A method to improve the radio cell coverage in a cellular mobile radio system, in which a number of adjacent and adjoining cells (20-26) form a cluster (10, 13), in which at least one fixed station (1) with at least one sector antenna is arranged in the marginal area of each cell (20), and in which the transmissions of a mobile station (34) are received by the fixed station (1) of the cell (20) in which the mobile station (34) is located and by the fixed stations (2, 3) of the adjoining cells, **characterised in that** each sector antenna sweeps at least the area of the cell (20) with radio frequencies of a channel group, the fixed stations (2, 3) of adjacent cells (21, 23) immediately adjoining a cell (20) transmitting into this cell (20) with the same channel group as the fixed station (1) of the cell (20) to be covered, and **in that** each channel in each fixed station (1, 2, 3) transmits with an individual, adjustable output, the output of each fixed station (1, 2, 3) on this channel being set in proportion to the share of the transmission output of this fixed station (1, 2, 3) at the receiver input of the mobile station (34), and **in that** a balancing of the transmission outputs between the fixed stations (1, 2, 3) takes place such that the fixed stations which are nearest to the mobile station (34) transmit with a portion of their output, whilst the fixed stations which farther away from the mobile station (34) transmit with a smaller portion of their output or are completely switched off.

2. A method to improve the radio cell coverage in a cellular mobile radio system, in which a number of adjacent and adjoining cells (20-26) form a cluster (10, 13), in which at least one fixed station (1) with at least one sector antenna is arranged in the marginal area of each cell (20), **characterised in that** each sector antenna sweeps at least the area of the cell (20) with radio frequencies of a channel group, the fixed stations (2, 3) of adjacent cells (21, 23) immediately adjoining a cell (20) transmitting into this cell (20) with the same channel group as the fixed station (1) of the cell (20) to be covered, and **in that** each channel in each fixed station (1, 2, 3) transmits with an individual, adjustable output, the output of each fixed station (1, 2, 3) on this channel being set in proportion to the output received from the mobile station (34) at the receiver input of this fixed station (1, 2, 3).

3. A method according to Claim 1 or 2, **characterised in that** the fixed stations (1, 2, 3) are synchronised with each other.

4. A method according to one of Claims 1 to 3, **characterised in that** each mobile station (34) located in one of the cells (20-26) is covered by at most three different fixed stations (1, 2, 3) simultaneously.

5. A method according to one of Claims 1 to 4, **characterised in that** the transmission outputs of the fixed stations (1, 2, 3) are set so that their total output at the receiver input of the mobile station (34) lies just above the minimum tolerable signal-interference interval for a defined transmission quality with fading.

6. A method according to one of Claims 2 to 5, **characterised in that** the transmissions of a mobile station (34) are received by the fixed station (1) of the cell (20) in which the mobile station (34) is located and by the fixed stations (2, 3) of the adjoining cells and **in that** a balancing of the transmission outputs between these fixed stations (1, 2, 3) takes place such that the fixed stations which are nearest to the mobile station (34) transmit with a portion of their outputs, whilst the fixed stations which farther away from the mobile station (34) transmit with a smaller portion of their output or are completely switched off.

7. A method according to one of Claims 1 to 6, **characterised in that** the transmissions of a mobile station (34) are received by the fixed station (1) of the cell in which the mobile station (34) is located and by the fixed stations (2, 3) of the adjoining cells (21, 23) and **in that** these received signals are subjected to a diversity-combining process to improve the quality.

8. A method according to one of Claims 1 to 7, **characterised in that** handover of a mobile station (34) from one sector of a cell (20) to an adjacent sector of this cell while the mobile station is connected is effected by an adaptive output assignment of the fixed stations (1, 2, 3) covering the cell.

9. A method according to one of Claims 1 to 8, **characterised in that** handover of a mobile station (34) from one cell to an adjacent cell while the mobile station is connected is effected by a change of channel such that at least one of the fixed stations (1 or 2 or 3, or 1 and 2, or 1 and 3, or 2 and 3) takes part in the connection both before and after handover.

10. A device for radio cell coverage in a cellular mobile radio system, consisting of one or more cells forming clusters, where at least one fixed station that has at least one sector antenna is arranged in the marginal area of each cell and the fixed stations are synchronised with each other, **characterised in that** each fixed station sweeps at least the area of this cell (20) with a channel group, a particular channel group being assigned to each of the sectors of a fixed station and sectors of adjacent fixed stations which face each other possessing the same channel group, and **in that** a total of six sector antennae (A to F) each with a sector angle (27-32) of 120° are assigned to each fixed station (1 to 9) and **in that** the transmission ranges of the sector antennae (A to F) overlap by 60° in each case, and sweep a 360° area.

11. A device for radio cell coverage in a cellular mobile radio system, consisting of one or more cells forming clusters, where at least one fixed station that has at least one sector antenna is arranged in the marginal area of each cell and the fixed stations are synchronised with each other, **characterised in that** each fixed station sweeps at least the area of this cell (20) with a channel group, a particular channel group being assigned to each of the sectors of a fixed station and sectors of adjacent fixed stations which face each other possessing the same channel group, and **in that** a total of eight sector antennae each with a sector angle of 90° are assigned to each fixed station (1 to 9) and **in that** the transmission ranges of the sector antennae overlap by 45° in each case, and sweep a 360° area.

12. A device for radio cell coverage in a cellular mobile radio system, consisting of one or more cells forming clusters, where at least one fixed station that has at least one sector antenna is arranged in the marginal area of each cell and the fixed stations are synchronised with each other, **characterised in that** each fixed station sweeps at least the area of this cell (20) with a channel group, a particular channel group being assigned to each of the sectors of a fixed station and sectors of adjacent fixed stations which face each other possessing the same channel group, and **in that** a total of twelve sector antennae each with a sector angle of 60° are assigned to each fixed station (1 to 9) and **in that** the transmission ranges of the sector antennae overlap by 30° in each case, and sweep a 360° area.

13. A device according to one of Claims 10 to 12, **characterised in that** the transmission output of each channel in each fixed station (1, 2, 3) is adjustable as a function of the output received from the mobile station (34) at the receiver input of this fixed station (1, 2, 3) and is set in relation to the respective transmission output of this mobile station.

14. A device according to one of Claims 10 to 13, **characterised in that** each fixed station (1 to 3) transmits with only a fraction of the output which would be necessary to cover the entire cell (20) with transmission output.

## Revendications

1. Procédé pour améliorer la couverture de cellules radio dans un système de mobilophone cellulaire, selon lequel un certain nombre de cellules voisines et contiguës (20-26) forme une grappe (10, 13), étant précisé qu'il est prévu, dans la zone du bord de chaque cellule (20), au moins un émetteur fixe (1) pourvu d'au moins une antenne en forme de secteur, et que les émissions d'un poste mobile (34) sont reçues par le poste fixe (1) de la cellule (20) dans laquelle se trouve ledit poste mobile (34) et par les postes fixes (2, 3) des cellules contiguës, **caractérisé en ce que** chaque antenne en forme de secteur balaie au moins la zone de la cellule (20) avec des fréquences radio d'un groupe de canaux, étant précisé que les émetteurs fixes (2, 3) de cellules voisines (21, 23) directement contiguës à une cellule (20) émettent vers cette cellule (20) avec le même groupe de canaux que l'émetteur fixe (1) de la cellule (20) elle-même à alimenter, **en ce que** chaque canal émet dans chaque poste fixe (1, 2, 3) avec une puissance individuelle réglable, la puissance d'un poste fixe (1, 2, 3) sur ce canal étant réglée proportionnellement à la contribution de la puissance d'émission de ce poste fixe (1, 2, 3) à l'entrée de réception du poste mobile (34), et **en ce qu'**une égalisation des puissances d'émission a lieu entre les postes fixes (1, 2, 3), de sorte que ce sont les postes fixes les plus proches du poste mobile (34) qui émettent avec une partie de leur puissance, tandis que les postes fixes qui sont éloignés du poste mobile (34) émettent avec une plus petite partie de leur puissance ou sont complètement déconnectés.

2. Procédé pour améliorer la couverture de cellules radio dans un système de mobilophone cellulaire, selon lequel un certain nombre de cellules voisines et contiguës (20-26) forme une grappe (10, 13), étant précisé qu'il est prévu, dans la zone du bord de chaque cellule (20), au moins un émetteur fixe (1) pourvu d'au moins une antenne en forme de secteur, **caractérisé en ce que** chaque antenne en forme de secteur balaie au moins la zone de la cellule (20) avec des fréquences radio d'un groupe de canaux, étant précisé que les émetteurs fixes (2, 3) de cellules voisines (21, 23) directement contiguës à une cellule (20) émettent vers cette cellule (20) avec le même groupe de canaux que l'émetteur fixe (1) de la cellule (20) elle-même à alimenter, et **en ce que** chaque canal émet dans chaque poste fixe (1, 2, 3) avec une puissance individuelle réglable, la puissance d'un poste fixe (1, 2, 3) sur ce canal étant réglée proportionnellement à la puissance reçue par le poste mobile (34) à l'entrée de réception de ce poste fixe (1, 2, 3).

3. Procédé selon la revendication 1 ou 2,
**caractérisé en ce que** les émetteurs fixes (1, 2, 3) sont synchronisés entre eux.

4. Procédé selon l'une des revendications 1 à 3, **caractérisé en ce que** chaque poste mobile (34) qui se trouve dans l'une des cellules (20-26) est alimenté en même temps au maximum par trois postes fixes différents (1, 2, 3).

5. Procédé selon l'une des revendications 1 à 4, **caractérisé en ce que** la puissance d'émission des postes fixes (1, 2, 3) est réglée pour que leur puissance totalisée à l'entrée de réception du poste mobile (34) soit située juste au-dessus de l'écart signal-interférence minimum toléré pour une qualité de transmission définie, dans des conditions d'évanouissement.

6. Procédé selon l'une des revendications 2 à 5, **caractérisé en ce que** les émissions d'un poste mobile (34) sont reçues par le poste fixe (1) de la cellule (20) dans laquelle se trouve ledit poste mobile (34) et par les postes fixes (2, 3) des cellules contiguës, et en ce qu'une égalisation des puissances d'émission a lieu entre ces postes fixes (1, 2, 3), de sorte que ce sont les postes fixes les plus proches du poste mobile (34) qui émettent avec une partie de leur puissance, tandis que les postes fixes qui sont éloignés du poste mobile (34) émettent avec une plus petite partie de leur puissance ou sont complètement déconnectés.

7. Procédé selon l'une des revendications 1 à 6, **caractérisé en ce que** les émissions d'un poste mobile (34) sont reçues par le poste fixe (1) de la cellule dans laquelle se trouve le poste mobile (34) et par les postes fixes (2, 3) des cellules contiguës (21, 23), et **en ce que** ces signaux reçus sont soumis, en vue d'une amélioration de la qualité, à une sélection de diversité.

8. Procédé selon l'une des revendications 1 à 7, **caractérisé en ce que** la procédure de transfert d'un poste mobile (34) à l'état de liaison, d'un secteur d'une cellule (20) à un secteur de cette cellule voisin se fait grâce à une attribution de puissance adaptative des postes fixes (1, 2, 3) qui couvrent la cellule.

9. Procédé selon l'une des revendications 1 à 8, **caractérisé en ce que** la procédure de transfert d'un poste mobile (34) à l'état de liaison, d'une cellule à une cellule voisine se fait grâce à un changement de canal, de sorte que l'un au moins des postes fixes (1 ou 2 ou 3, ou 1 et 2, ou 1 et 3, ou 2 et 3) participe à la liaison aussi bien avant qu'après la procédure de transfert.

10. Dispositif pour la couverture de cellules radio dans un système de mobilophone cellulaire, comprenant une ou plusieurs cellules formant une grappe dans laquelle il est prévu, dans la zone du bord de chaque cellule, au moins un poste fixe comportant au moins une antenne en forme de secteur et les postes fixes sont synchronisés entre eux, **caractérisé en ce que** chaque poste fixe balaie au moins la zone de cette cellule (20) avec un groupe de canaux, étant précisé qu'il est prévu, associé à chacun des secteurs d'un poste fixe, un groupe de canaux propre et que des secteurs de postes fixes voisins qui sont tournés les uns vers les autres ont le même groupe de canaux, **en ce qu'**il est prévu au total, associées à chaque poste fixe (1 à 9), six antennes en forme de secteurs (A à F) présentant chacune un angle de secteur (27-32) de 120°, et **en ce que** les portées d'émission des antennes en forme de secteurs (A à F) se recouvrent à chaque fois à 600 et balaient une zone de 360°.

11. Dispositif pour la couverture de cellules radio dans un système de mobilophone cellulaire, comprenant une ou plusieurs cellules formant une grappe dans laquelle il est prévu, dans la zone du bord de chaque cellule, au moins un poste fixe comportant au moins une antenne en forme de secteur et les postes fixes sont synchronisés entre eux, **caractérisé en ce que** chaque poste fixe balaie au moins la zone de cette cellule (20) avec un groupe de canaux, étant précisé qu'il est prévu, associé à chacun des secteurs d'un poste fixe, un groupe de canaux propre et que des secteurs de postes fixes voisins qui sont tournés les uns vers les autres ont le même groupe de canaux, **en ce qu'**il est prévu au total, associées à chaque poste fixe (1 à 9), huit antennes en forme de secteurs présentant chacune un angle de secteur de 90°, et **en ce que** les portées d'émission des antennes en forme de secteurs se recouvrent à chaque fois à 45° et balaient une zone de 360°.

12. Dispositif pour la couverture de cellules radio dans un système de mobilophone cellulaire, comprenant une ou plusieurs cellules formant une grappe dans laquelle il est prévu, dans la zone du bord de chaque cellule, au moins un poste fixe comportant au moins une antenne en forme de secteur et les postes fixes sont synchronisés entre eux, **caractérisé en ce que** chaque poste fixe balaie au moins la zone de cette cellule (20) avec un groupe de canaux, étant précisé qu'il est prévu, associé à chacun des secteurs d'un poste fixe, un groupe de canaux propre et que des secteurs de postes fixes voisins qui sont tournés les uns vers les autres ont le même groupe de canaux, **en ce qu'**il est prévu au total, associées à chaque poste fixe (1 à 9), douze antennes en forme de secteurs présentant chacune un angle de secteur de 60°, et **en ce que** les portées d'émission des antennes en forme de secteurs se recouvrent à chaque fois à 30° et balaient une zone de 360°.

13. Dispositif selon l'une des revendications la à 12, **caractérisé en ce que** la puissance d'émission de chaque canal est réglable dans chaque poste fixe (1, 2, 3) en fonction de la puissance reçue du poste mobile (34) au niveau de l'entrée de réception de ce poste fixe (1, 2, 3), et est réglée par rapport à la puissance d'émission de ce poste mobile.

14. Dispositif selon l'une des revendications la à 13, **caractérisé en ce que** chaque poste fixe (1 à 3) émet seulement avec une fraction de la puissance qui serait nécessaire pour alimenter toute la cellule (20) avec une puissance d'émission.
